# EUROPÄISCHE PATENTANMELDUNG

(11) **EP 2 428 714 A1**
(43) Veröffentlichungstag der Anmeldung: **14.03.2012**
(21) Anmeldenummer: 10009328.5
(22) Anmeldetag: 08.09.2010
(51) Int. Cl.: F16K 31/383

(54) **Schnellöffnungsventil für einen Löschmittelbehälter**

(71) Anmelder: Minimax GmbH & Co KG, 23840 Bad Oldesloe (DE)
(72) Erfinder: Felberg, Jan, Dipl.-Ing., 23560 Lübeck (DE)
(74) Vertreter: Lüdtke, Frank

(57) **Zusammenfassung**

Die Erfindung betrifft Schnellöffnungsventil für Löschmittelbehälter, bestehend aus dem Ventilkörper (2) mit dem Anschlußgewinde (14) zum Löschmittelbehälter (8), dem Dichtungskolben (3) zwischen Strömungsquerschnitt (4) zum Löschmittelbehälter (8) und der oberen Druckkammer (5), dem seitlichen Strömungsquerschnitt (4) zum Kundenanschluß und der Dichtung (13) des Dichtungskolbens (3), welches
- einen weitestgehend gleichbleibenden Strömungsquerschnitt (4) im gesamten Ventilkörper (2) aufweis, der durch ein Unterteil (17) des Dichtungskolbens (3) verschließbar ist,
- einen Dichtungskolben (3) aufweist, dessen unterer Teil (17) mit seiner Mantelfläche den Strömungsquerschnitt (4) radial verschließt, wobei
- in der Mantelfläche des unteren Teils (17) eine Dichtung (13) angeordnet ist und
- einen Verbindungskanal (6,15) zwischen der oberen Druckkammer (5) und dem unter dem Dichtkolben (3) befindlichen Raum (4,8) aufweist, wobei im Verbindungskanal (6,15) eine Schließeinrichtung (16) angeordnet ist.

## Beschreibung

Die Erfindung betrifft ein Schnellöffnungsventil für Löschmittelbehälter entsprechend den Merkmalen des ersten Patentanspruches.

Die Erfindung ist überall dort anwendbar, wo Löschmittelbehälter vorhanden sind, in denen hohe Drücke herrschen und das Löschmittel mit geringer Ausbringzeit kontrolliert zum Löschen ausgebracht werden muß.

Schnellöffnungsventile für Löschmittelbehälter arbeiten in der Regel nach dem Differenzdruckprinzip. Das Differenzdruckprinzip besitzt im Inneren des Ventilkörpers einen Dichtungskolben, der sich axial bewegen kann und in der verschlossenen Position den Strömungsquerschnitt axial abdichtet und verschließt. Die notwendige Kraft, die zum Verschließen des Strömungsquerschnitts gegen des Mediums Druck benötigt wird, bezieht das Differenzdruckventil aus dem anstehenden Mediums-Druck aus dem Löschmittelbehälter. Oberhalb des Dichtungskolbens ist eine Druckkammer in dem Ventil, in der der Mediums-Druck auch wirken kann. Der Dichtungskolben besitzt in der oberen Druckkammer eine größere wirkende Fläche, als die, die den Strömungsquerschnitt verschließt. Somit entsteht bei gleichen Druckverhältnissen der oberen Druckkammer und des Löschmittelbehälters eine größere Kraft auf den Dichtungskolben, die den Strömungsquerschnitt verschließt. Die Druckkammer des Ventils sowie der Löschmittelbehälter sind durch einen kleinen Kanal miteinander verbunden. Dieser Kanal kann im Dichtungskolben selbst liegen oder im Ventilkörper untergebracht sein oder die beiden Druckkammern werden durch extern verlegte Leitungen miteinander verbunden. Zum Öffnen des Ventils ist an der oberen Druckkammer im Ventil eine Entlüftungseinrichtung eingebracht. Durch Ansteuerung dieser Entlüftungseinrichtung kann der Druck in der oberen Druckkammer schnell entlassen werden. Dadurch, daß der Kanal zwischen oberer Druckkammer und Löschmittelbehälter immer sehr viel kleiner ausgeführt wird als der frei werdende Querschnitt der Entlüftungseinrichtung, entsteht für kurze Zeit ein Differenzdruck ober- und unterhalb des Dichtungskolbens. Durch diesen Druckabfall in der oberen Druckkammer ist die Kraft zum Öffnen des Dichtungskolbens nun größer als die Kraft, die zum Verschließen notwendig ist. Das Ventil öffnet. Beim Öffnen des Ventils wird der Kanal geschlossen, um ein selbsttätiges Wiederverschließen zu verhindern.

Spezifikationen für das Schnellöffnungsventil sind der DIN EN ISO 10297 zu entnehmen.

Am Ventilkörper ist in der Regel ein gesonderter Schlauchanschluß angeordnet, mit dem der Hersteller einen speziellen Schlauchanschluß für Kunden am Ventil liefert. Damit muß für jeden Kunden ein gesondertes Schlauchanschlußventil am Ventilkörper ausgeführt werden, was unterschiedliche Ventilkörper oder Anschlüsse an diese erfordert.

Weiterhin weisen alle derzeitig gängigen Lösungen für Schnellöffnungsventile für Löschmittelbehälter einen maximalen Betriebsdruck für das Löschmedium von 300 bar bei einer spezifizierten Befülltemperatur von 15°C auf. Ein höherer Druck ist sowohl konstruktiv als auch materialtechnisch bei den derzeitigen Ausführungen auf dem Marktnicht vorhanden.

Schnellöffnungsventile für Löschmittelbehälter nach dem Differenzdruckprinzip dichten den Strömungsquerschnitt axial ab. Das heißt, daß der Dichtungskolben an der Unterseite mit einer eingelassenen Dichtung versehen ist, die axial auf den Dichtungssitz gepreßt wird. Das hat den Nachteil einer breiten Bauform, was einen ungünstigen Strömungsverlauf zur Folge hat, der sich ungünstig auf eine möglichst kurze Ausbringungszeit von Löschmittel auswirkt.

Schnellöffnungsventile für Löschmittelbehälter nach dem Differenzdruckprinzip können durch ihre Konstruktion schnell geöffnet werden. Dadurch, daß ein Verschließen des Verbindungskanals notwendig ist, dafür, daß das Ventil auch offen bleibt, ist ein schnelles darauffolgendes Schließen noch im Fall von ausströmendem Löschmedium mit den auf dem Markt befindlichen Ventilen nicht möglich, bzw. alle derzeit auf dem Markt befindlichen Schnellöffnungsventile für Löschmittelbehälter nach dem Differenzdruckprinzip schließen erst bei Erreichen eines sehr geringen Restdruckes in der Flasche durch eine Federkraft.

Damit haben herkömmliche Schnellöffnungsventile, die für einen Löschmittelbehälter eingesetzt werden, die Nachteile, daß ein schnelles Ausbringen des Löschmittels, einen Einsatz für Drücke > 300 bar im Löschmittelbehälter und ein kontrolliertes Verschließen nicht oder nur begrenzt möglich ist und Anschlüsse für Kunden separat anzubringen sind.

Aufgabe der Erfindung ist es deshalb, ein Schnellöffnungsventil für Löschmittelbehälter zu entwickeln, welches eine geringere Ausbringzeit, ein intermittierendes Löschen, einen Druck im Löschmittelbehälter > 300 bar und ein Abstellen des Löschmittelflusses ermöglicht, wobei es problemlos möglich sein soll, unterschiedliche Anschlüsse von Kunden am Ventilkörper anzubringen, ohne den Ventilkörper anpassen zu müssen.

Diese Aufgabe wird durch ein Schnellöffnungsventil für Löschmittelbehälter nach den Merkmalen des ersten Patentanspruches gelöst.

Unteransprüche geben vorteilhafte Ausgestaltungen der Erfindung wieder.

Die erfindungsgemäße Lösung sieht ein Schnellöffnungsventil für Löschmittelbehälter vor, der aus dem Ventilkörper mit dem Anschlußgewinde zum Löschmittelbehälter, dem Dichtungskolben zwischen Strömungsquerschnitt zum Löschmittelbehälter und der oberen Druckkammer, dem seitlichen Strömungsquerschnitt zum Kundenanschluß und der Dichtung des Dichtungskolbens besteht.

Erfindungsgemäß zeichnet sich das Schnellöffnungsventil durch einen weitestgehend gleichbleibenden Strömungsquerschnitt im gesamten Ventilkörper aus, der durch ein Unterteil des Dichtungskolbens verschließbar ist.
Der untere Teil des Dichtungskolbens weist in seiner Mantelfläche eine Dichtung auf und ist in der Lage den Strömungsquerschnitt durch die Dichtung in der Mantelfläche radial abzudichten.

Das nach dem Differenzdruckprinzip dichtende Ventil dichtet damit den Strömungsquerschnitt radial ab, wodurch eine schlankere Konstruktion möglich ist, da der Dichtungskolben genau so groß ausgeführt werden kann wie der zu verschließende Strömungsquerschnitt.

Ein Verbindungskanal kann sowohl im Dichtungskolben als auch im Ventilkörper oder extern neben dem Ventilkörper angeordnet sein und verbindet die obere Druckkammer mit dem Strömungsquerschnitt unter dem Dichtkolben oder führt direkt zum Löschmittelbehälter oder einer separaten Druckversorgung.

Im Verbindungskanal kann eine Schließeinrichtung, beispielsweise ein Rückschlagventil oder ein steuerbares Mehrzweckventil angeordnet sein.

Die vorgeschlagene Lösung sieht vor, daß die Feder den Dichtungskolben immer offen hält, um somit ein vollständiges Entleeren des Löschmittelbehälters zu gewährleisten. Auch in dieser Ausführung wird der Verbindungskanal geschlossen, wenn der Dichtungskolben in der geöffneten Position ist. Dadurch, daß in der vorliegenden Ausführung der Dichtungskolben drucklos immer offen ist, kann sich der Dichtungskolben nie von selbst schließen, auch nicht im befüllten Zustand des Löschmittelbehälters. Der zugesperrte Verbindungskanal oder ein zweiter separater Verbindungskanal kann durch Ansteuerung geöffnet werden, um die obere Druckkammer wieder mit Druck zu befüllen. Durch diese neue Ansteuerung ist es möglich, den Dichtungskolben auch nach dem Öffnen des Ventils während des Ausströmvorgangs des Löschmediums per Ansteuerung wieder zu verschließen. Intermittierendes Ausbringen des Löschmediums ist somit möglich. Dafür wird in diesen Verbindungskanal eine von außen ansteuerbare Schließeinrichtung integriert. Durch Ansteuern dieses Mechanismus kann der Verbindungskanal geöffnet werden. Der Verbindungskanal kann auf verschiedene Weisen im oder am Ventilkörper angelegt werden. Er kann im Dichtungskolben direkt liegen, als Bypassleitung im Ventilkörper untergebracht sein oder den Druck aus dem Löschmittelbehälter über eine externe Leitung außerhalb des Ventilkörpers in die obere Druckkammer leiten. In allen drei Fällen muß die Schließeinrichtung im Verbindungskanal integriert sein. Die Schließeinrichtung kann von außen (außerhalb des Ventilkörpers) angesteuert werden. Die Schließeinrichtung kann auf unterschiedlichste Weisen ausgeführt sein, z. B. als Ventil, Rückschlagventil, Kugelhahn, Magnetventil, Absperrhahn und alles, was einen Absperrmechanismus im Sinne von Dichtheit, Ansteuerbarkeit kennzeichnet.
Ein Adapter Schlauchanschluß soll es ermöglichen, am Ventil für den Löschmittelbehälter einen veränderlichen kundenspezifischen Schlauchanschluß anzubieten, ohne dabei den Ventilkörper kundenspezifisch umzuarbeiten. Der Adapter Schlauchanschluß ist ausgeführt wie ein Doppelnippel mit zwei Schnittstellen. Die eine Schnittstelle ist die zwischen Adapter und Ventilkörper, die andere Schnittstelle ist diejenige zwischen Adapter und Schlauch, Rohr oder sonst geartetem Leitungsschluß. Die Schnittstelle Adapter Ventilkörper wird vom Hersteller des Ventils festgelegt. Dadurch braucht der Hersteller des Ventils seinen Ventilkörper nicht mehr zu verändern, wenn ein Kunde einen anderen Anschluß für seinen Anschluß braucht. Die Schnittstelle Adapter Schlauch kann nun kundenspezifisch angepaßt werden.
Jede Schnittstelle kann auf unterschiedlichste Weisen ausgeführt werden. Als Gewinde, als Ausführung mit Sicherung des Adapters durch Bolzen- oder Stiftsicherung oder der Adapter ist gesichert durch Sicherungsringe oder -scheiben. Weiter ist jede denkbare Art einer Steckverbindung mit oder ohne Sicherung möglich. Auch ein Einschweißen, Einkleben, Einschrumpfen oder Einpressen des Adapters in den Ventilkörper oder an den weiterführenden Leitungsanschluß kann angedacht werden.

Der Adapter ist bei Ausführungen mit Gewinde an mindestens einer der beiden Schnittstellen gegen Verdrehen zu sichern, um ein Abschrauben des Schlauchanschlusses zu gewährleisten.

Bei der vorgeschlagenen Lösung paßt der Adapter am Ventil mit optionaler aufgeschraubter Verschlußmutter unter eine geschlossene Standard-Flaschenkappe nach DIN EN 962. Dies ist jedoch kein Muß. Wenn der Adapter zu groß ist, um unter diese geschlossene Standard-Flaschenkappe nach DIN EN 962 zu passen, kann der Adapter auch mit dem Löschmittelbehälterventil zusammen oder separat mitgeliefert werden.

Je nach Einsatzfall muß der Adapter zum Strömungsquerschnitt hin abgedichtet werden. Diese Abdichtung, die vorzugsweise über eine O-Ring oder Flachdichtung, aber auch über jegliche andere Art von Dichtung, geschieht, dichtet den Adapter zum Ventilkörper hin ab.

Durch die radiale Abdichtung des Strömungsquerschnittes bei einem Schnellöffnungsventil für Löschmittelbehälter nach dem Differenzdruckprinzip kann man eine sehr schlanke Bauform erreichen. Durch diese schlanke Bauform können auch erforderliche Wandstärken am Ventilkörper erreicht werden, um 500 bar Betriebsdruck der Löschmittelbehälter sicherzustellen.

Durch den Wegfall des axialen Dichtungssitzes durch die radiale Dichtung und einen sehr lang ausgeführten Öffnungshub des Dichtungskolbens wird weiter eine strake Reduzierung des Strömungswiderstandes im Strömungsquerschnitt erreicht. Durch einen langen Öffnungshub kann der Dichtungskolben komplett aus dem Strömungsquerschnitt heraus gefahren werden. Alle diese Maßnahmen verringern den Strömungswiderstand, der sich direkt auf die Ausbringungszeit des Löschmediums niederschlägt. Durch die Verringerung der Ausbringungszeit können Löschmittelbehälter schneller entleert werden oder es können größere Mengen in der gleichen Zeit aus dem Löschmittelbehälter strömen. Dies ist gerade im Brandschutzbereich ein enormer Vorteil, wo es immer darauf ankommt, schnell eine löschfähige Konzentration des Löschmediums im Raum aufzubauen. Es können weiter auch größere Flaschen mit mehr Löschmedium bevorratet werden, die immer noch in der gleichen geforderten Ausbringungszeit entleert werden können. Dies kann einen enormen Kostenvorteil erbringen, indem bei Anlagen diverse zusätzliche Löschmittelbehälter durch größere ersetzt werden. Jede Flasche mehr in einer Löschanlage erhöht die Kosten. Größere Löschmittelbehälter, die in gleicher Ausbringungszeit wie kleinere Löschmittelbehälter entleert werden können, sind ein Wettbewerbsvorteil. Weiter ist es denkbar, bei der Verwendung von Stählen für den Ventilkörper und der radialen Abdichtung des Strömungsquerschnitts nicht die Betriebsdrücke durch die neue Bauform zu erhöhen, sondern bei gleichbleibendem Betriebsdruck den Strömungsquerschnitt im Ventilkörper zu erhöhen. Vorteile dieser Variante wären die gleichen, wie schon vorher beschrieben, die schnellere Ausbringungszeit und das Zurückgreifen auf Standard geschlossene Flaschenkappen.

Der Werkstoff des Ventilkörpers ist vorzugsweise aus Bau-, Einsatz-, Nitrier-, Vergütungs-, Schmiede- oder Edelstahl sowie aus Warm-, Kalt- oder Schellarbeitsstählen hergestellt. Durch die Verwendung von Stählen bzw. Werkstoffen mit einer höheren Streckgrenze als Messing ist eine weitere Verschlankung des Ventilkörpers möglich bei gleichbleibendem Strömungsquerschnitt. Durch diese Maßnahmen paßt das Ventil auch bei 500 bar Betriebsdruck des Löschmittelbehälters und gleichbleibender Größe des Strömungsquerschnittes noch unter eine geschlossene Standard-Flaschenkappe nach DIN EN 962. Es braucht auf keine offenen oder Sonder-Standard-Flaschenkappen zurückgegriffen zu werden.

Im Folgenden wird die Erfindung an einem Ausführungsbeispiel und sechs Figuren näher erläutert. Die Figuren zeigen:
- Figur 1:: Schnellöffnungsventil im Schnitt in geöffneter Stellung.
- Figur 2:: Schnellöffnungsventil im Schnitt in geöffneter Stellung mit Schließeinrichtung im Dichtungskolben.
- Figur 3:: Schnellöffnungsventil im Schnitt in geöffneter Stellung mit Schließeinrichtung im Ventilkörper.
- Figur 4:: Schnellöffnungsventil im Schnitt in geöffneter Stellung mit Schließeinrichtung neben dem Ventilkörper.
- Figur 5:: Schnellöffnungsventil im Schnitt in geöffneter Stellung mit Schließeinrichtung mit steuerbarem Mehrzweckventil im Ventilkörper.
- Figur 6:: Schnellöffnungsventil im Schnitt in geöffneter Stellung mit Schließeinrichtung mit steuerbaren Mehrzweckventilen neben dem Ventilkörper.

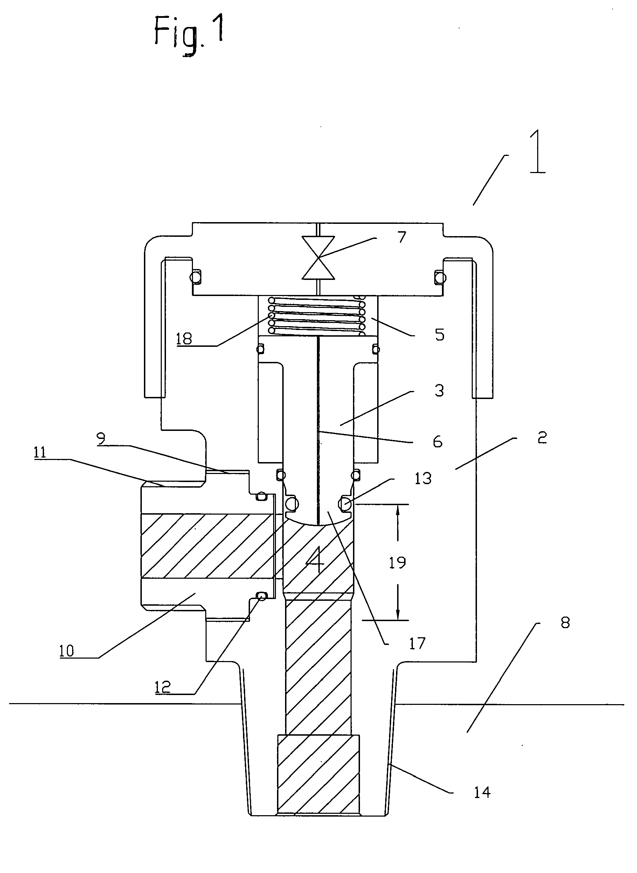

Die *Figur 1* zeigt das Schnellöffnungsventil 1 im Schnitt in geöffneter Stellung, welches in das Anschlußgewinde 14 des Löschmittelbehälters 8 eingeschraubt ist. Das Löschmittel aus dem Löschmittelbehälter 8 kann durch den Strömungsquerschnitt 4 über den Adapter 10 und dessen Anschlußteil 11 einem Kundenanschluß, beispielsweise einer Feuerlöscheinrichtung, zugeführt werden. Zwischen dem Adapter 10 und dem Ventilkörper 2 ist die Dichtung 12 angeordnet, wobei der Adapter 10 in das Gewinde 9 des Ventilkörpers 2 eingeschraubt ist. Je nach Wunsch des jeweiligen Kunden kann an den Adapter ein vorgesehener Kundenanschluß angeordnet werden bzw. der Adapter 10 kann so ausgeführt werden, wie das der betreffende Kunde wünscht, ohne daß der Ventilkörper 2 verändert werden muß.

Zum Öffnen des Ventils 1 wurde der Dichtungskolben 3 um den Öffnungshub 19 angehoben, wobei in der Mantelfläche des unteren Teils 17 des Dichtungskolbens 3 die Dichtung 13 angeordnet ist. Das Differenzdruckventil 1 weist immer einen Verbindungskanal 6 auf, der die obere Druckkammer 5 mit dem Löschmittelbehälter Druck verbindet. In der Regel ist dieser Kanal 6 im Dichtungskolben 3 selbst untergebracht. Er ermöglicht im geschlossenen Zustand des Ventils 1 einen Druckausgleich zwischen diesen beiden Druckräumen 4,5. Dieser Druckausgleich ist wichtig für z. B. Druckänderungen im Löschmittelbehälter 8 unter Temperaturänderung. Diese Druckänderung kann durch diesen Verbindungskanal 6 in beiden Druckräumen 5, 4, wirken, um somit die Funktionssicherheit sicherzustellen. Beim Öffnen des Ventils 1 ist eine Entlüftungseinrichtung 7 an der oberen Druckkammer 5 angeschlossen, die in der oberen Druckkammer 5 den Druck schlagartig entläßt. Dadurch, daß der Querschnitt des Verbindungskanals 6 sehr viel kleiner ausgeführt ist, als der offene Entlüftungsquerschnitt der Entlüftungseinrichtung 7, kann die obere Druckkammer 5 immer schneller entlüftet werden, als der Verbindungskanal 6 die obere Druckkammer 5 wieder mit Druck versorgen kann. Durch das nun ungleiche Druckverhältnis ist die Kraft zum Öffnen des Dichtungskolbens 3 größer als die Kraft, die den Dichtungskolben 3 verschließt. Der Dichtungskolben 3 öffnet nun. Gleichzeitig wird mit der Bewegung des Dichtungskolbens 3 nach oben der Verbindungskanal 6 verschlossen, um ein Wiederverschließen des Dichtungskolbens 3 zu verhindern. Eine Feder 18 spannt in der Regel den Dichtungskolben 3 immer in den Dichtungssitz. Dadurch schließt das Ventil 1 automatisch, wenn der Druck in dem Löschmittelbehälter 8 so weit sinkt, bis die Federkraft größer ist, als die Kraft, die den Dichtungskolben 3 offenhält. Durch dieses Prinzip verbleibt immer ein Restdruck in dem Löschmittelbehälter 8, so daß dieser nie vollständig entleert werden kann.

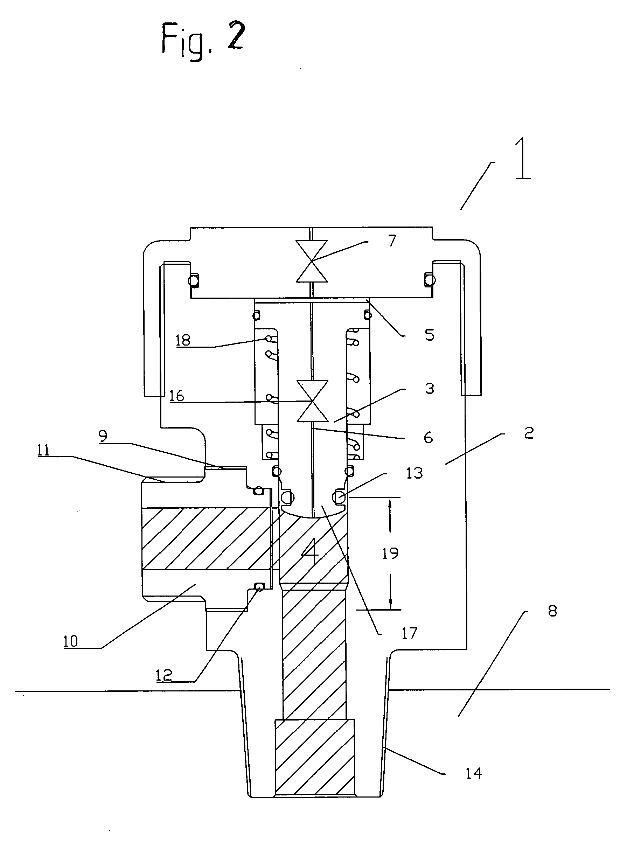

Eine weiterentwickelte Lösung zeigen demgegenüber die Figuren 2 bis 6. Diese beschreiben günstige Ausführungsvarianten, die gewährleisten, daß die Feder 18 den Dichtungskolben 3 immer offenhält, um damit ein vollständiges Entleeren des Löschmittelbehälters 8 zu gewährleisten. Um den Strömungsquerschnitt 4 durch den Dichtungskolben 3 wieder zu schließen, muß die obere Druckkammer 5 wieder befüllt werden, was über den Verbindungskanal 15 und die Schließeinrichtung 16 oder ein steuerbares Mehrzweckventil 20 als Schließeinrichtung möglich ist. Dadurch kann ein intermittierendes Ausbringen des Löschmittels erfolgen.

Die *Figur* 2 zeigt ein Ausführungsbeispiel, bei dem die Schließeinrichtung 16 im Dichtungskolben 3 selbst liegt. In dieser Ausführung muß die Schließeinrichtung 16 bei geschlossenem Dichtungskolben 3 immer offen sein und bei geöffnetem Dichtungskolben 3 selbsttätig in die geschlossene Position gehen, damit das Prinzip des Differenzdruckes bestehen bleibt. In der Position geöffneter Dichtungskolben 3 und geschlossene Schließeinrichtung16 muß es möglich sein, den Öffnungsmechanismus 16 von außen zu betätigen. Weiter darf sich hier der Verbindungskanal 15 bei Öffnen des Dichtungskolbens 3 nicht schließen, sondern die Schließeinrichtung 16 selbst muß sich schließen.

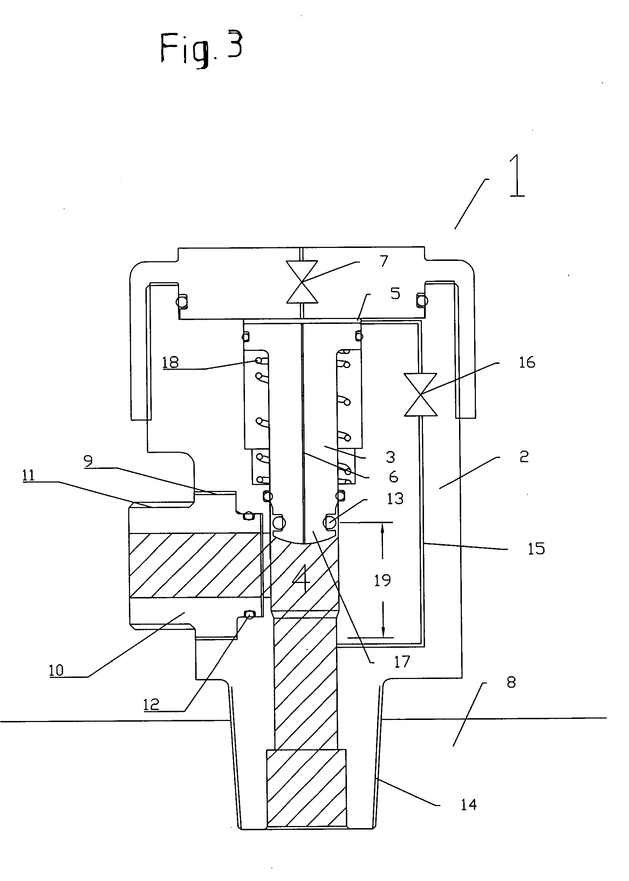

Die *Figur 3* zeigt die Ausführung eines zweiten separaten Verbindungskanals 15 im Ventilkörper 2 mit integrierter Schließeinrichtung 16, der nur dafür da ist, die obere Druckkammer 5 mit Druck zu beaufschlagen, um das Ventil 1 wieder zu schließen. Ansteuerung der Schließeinrichtung 16 muß von außen erfolgen.

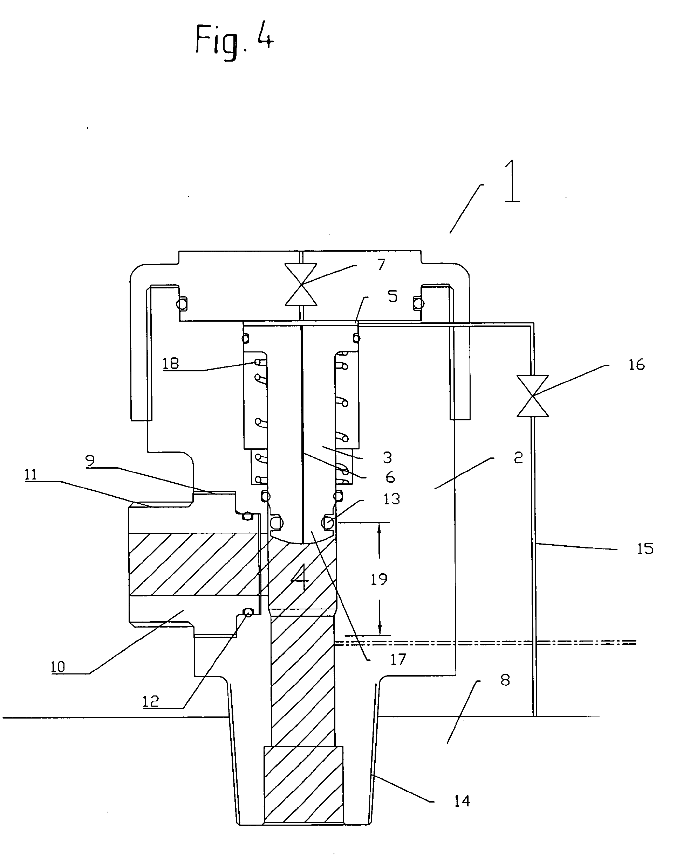

Die *Figur 4* zeigt die Ausführung eines zweiten separaten Verbindungskanals 15 als externe Leitung mit integrierter Schließeinrichtung 16, der nur dafür da ist, die obere Druckkammer 5 mit Druck zu beaufschlagen, um das Ventil 1 wieder zu schließen. Die Ansteuerung der Schließeinrichtung 16 liegt schon außerhalb des Ventilkörpers 2 und ist somit weniger kompliziert. Es kann sowohl der Löschmittelbehälter 8 selbst als auch der Ventilkörper 2 unterhalb des Dichtungssitzes als Druckentnahmepunkt verwendet werden. Weiter kann auch eine separate Druckversorgung angeschlossen werden.

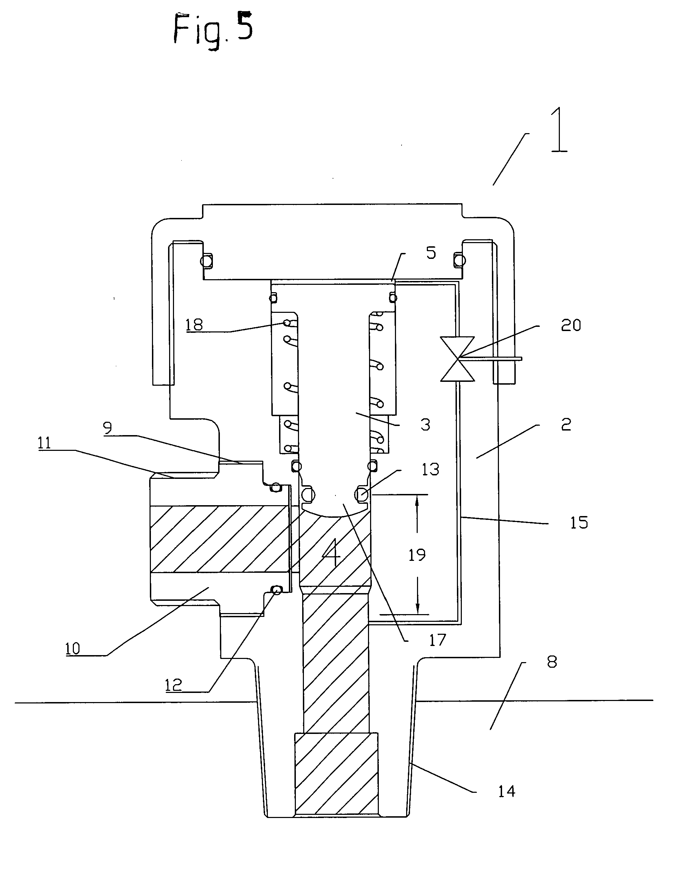

Die *Figur* 5 zeigt eine Ausführung, bestehend aus nur einem Verbindungskanal 15 zwischen Druckentnahmepunkt den Druckräumen 4, 5 im Ventilkörper 2 als Bypassleitung. Sowohl die Entlüftungseinrichtung als auch die Schließeinrichtung 16 ist hier in einem steuerbaren Mehrzweckventil 20 vereint. Dieses steuerbare Mehrzweckventil 20 kann im geschlossenen Zustand des Ventils 1 die Bypassleitung 15 offen halten, um einen Druckaustausch der beiden Druckräume 4, 5 zu gewährleisten. Weiter muß es den oberen Druckraum 5 entlüften können und gleichzeitig die Bypassleitung schließen bzw. geschlossen halten, um das Ventil 1 zu öffnen. Zum Schließen des Ventils 1 muß es die Bypassleitung zum oberen Druckraum 5 wieder öffnen können und gleichzeitig die Entlüftungseinrichtung 7 schließen bzw. geschlossen halten. Alle Funktionen des steuerbaren Mehrzweckventils 20 sind von außen ansteuerbar.

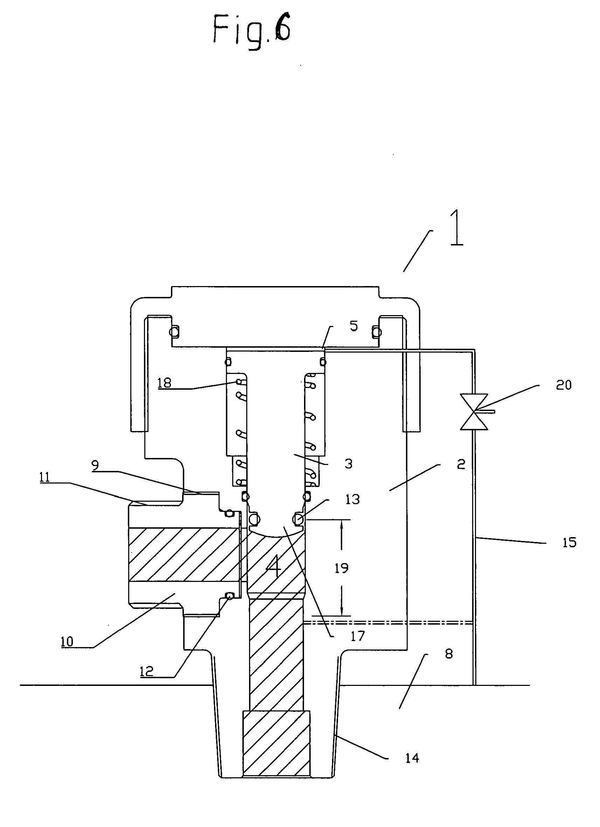

In der in *Figur* 6 gezeigten Ausführung besteht nur ein Verbindungskanal 15 zwischen den Druckräumen 4, 5 als externe Leitung außerhalb des Ventilkörpers 2. Es kann sowohl der Löschmittelbehälter 8 selbst als auch der Ventilkörper 2 unterhalb des Dichtungssitzes als Druckentnahmepunkt verwendet werden. Sowohl die Entlüftungseinrichtung als auch die Schließeinrichtung ist hier in einem steuerbaren Mehrzweckventil 20 vereint, welches außerhalb des Ventilkörpers 2 liegt. Dieses steuerbare Mehrzweckventil 20 kann im geschlossenen Zustand des Ventils 1 die externe Leitung offen halten, um einen Druckaustausch der beiden Druckräume 4, 5 zu gewährleisten. Weiter kann es den oberen Druckraum 5 entlüften können und gleichzeitig die externe Leitung unterhalb des Mehrzweckventils schließen bzw. geschlossen halten, um das Ventil 1 zu öffnen. Zum Schließen des Ventils 1 muß es die externe Leitung unterhalb des Mehrzweckventils zum oberen Druckraum 5 wieder öffnen können und gleichzeitig die Entlüftungsfunktion im Mehrzweckventil schließen bzw. geschlossen halten.

### Liste der verwendeten Bezugszeichen

- 1: Schnellöffnungsventil
- 2: Ventilkörper
- 3: Dichtungskolben
- 4: Strömungsquerschnitt
- 5: Obere Druckkammer
- 6: Kanal im Dichtungskolben 3
- 7: Entlüftungseinrichtung
- 8: Löschmittelbehälter
- 9: Adapteranschlußgewinde in 2
- 10: Adapter
- 11: Adapteranschlußteil
- 12: Dichtung zwischen 10 und 2
- 13: Dichtung des Dichtungskolbens zum Verschließen des Strömungsquerschnitts
- 14: Anschlußgewinde zum Löschmittelbehälter 8
- 15: Verbindungskanal
- 16: Schließeinrichtung
- 17: Unterer Teil des Dichtungskolbens 3
- 18: Feder
- 19: Öffnungshub
- 20: Steuerbare Mehrzweckventile

## Patentansprüche

1. Schnellöffnungsventil für Löschmittelbehälter, bestehend aus dem Ventilkörper (2) mit dem Anschlußgewinde (14) zum Löschmittelbehälter (8), dem Dichtungskolben (3) zwischen Strömungsquerschnitt (4) zum Löschmittelbehälter (8) und der oberen Druckkammer (5), dem seitlichen Strömungsquerschnitt (4) zum Kundenanschluß und der Dichtung (13) des Dichtungskolbens (3), **gekennzeichnet durch**
- einen weitestgehend gleichbleibenden Strömungsquerschnitt (4) im gesamten Ventilkörper (2), der **durch** ein Unterteil (17) des Dichtungskolbens (3) verschließbar ist,
- einen Dichtungskolben (3), dessen unterer Teil (17) mit seiner Mantelfläche den Strömungsquerschnitt (4) radial verschließt, wobei
- in der Mantelfläche des unteren Teils (17) eine Dichtung (13) angeordnet ist und
- einen Verbindungskanal (6, 15) zwischen der oberen Druckkammer (5) und dem unter dem Dichtkolben (3) befindlichen Raum (4, 8), wobei im Verbindungskanal (6, 15) eine Schließeinrichtung (16) angeordnet ist.

2. Schnellöffnungsventil nach Anspruch 1, **gekennzeichnet durch** einen Verbindungskanal (15) im oder am Ventilkörper (2).

3. Schnellöffnungsventil nach Anspruch 1, **dadurch gekennzeichnet, daß** im Kanal (6) des Dichtungskolbens (3) eine Schließeinrichtung (16) angeordnet ist.

4. Schnellöffnungsventil nach Anspruch 1, **dadurch gekennzeichnet, daß** in einem Verbindungskanal (15) am Ventilkörper (2) eine Schließeinrichtung (16) angeordnet ist.

5. Schnellöffnungsventil nach Anspruch 1, **dadurch gekennzeichnet, daß** die Schließeinrichtung im Verbindungskanal (15) im Ventilkörper (2) zwischen Strömungsquerschnitt (4) und oberer Druckkammer (5) ein steuerbares Mehrzweckventil (20) darstellt.

6. Schnellöffnungsventil nach Anspruch 1, **dadurch gekennzeichnet, daß** die Schließeinrichtung (16) im Verbindungskanal (15) neben dem Ventilkörper (2) ein steuerbares Mehrzweckventil (20) zwischen der oberen Druckkammer (5) und dem Strömungsquerschnitt (4) oder dem Löschmittelbehälter (8) darstellt.

7. Schnellöffnungsventil nach Anspruch 1, **gekennzeichnet durch** einen Adapter (10) mit einem Anschlußteil im Adapteranschluß (9) des Ventilkörpers (2) und einem Adapteranschlußteil (11) für einen Kundenanschluß.

8. Schnellöffnungsventil nach Anspruch 7, **gekennzeichnet durch** einen Adapter (10) mit einem Anschlußteil und einem Gewinde als Adapteranschluß (9).

9. Schnellöffnungsventil nach Anspruch 1, **gekennzeichnet durch** einen Ventilkörper (2) aus Bau-, Einsatz-, Nitier-, Vergütungs-, Schmiede- oder Edelstahl.
